# FASCICULE DE BREVET EUROPEEN

(11) **EP 3 674 840 B1**
(45) Date de publication et mention de la délivrance du brevet: **08.09.2021**
(21) Numéro de dépôt: 19219732.5
(22) Date de dépôt: 26.12.2019
(51) Int. Cl.: G06F 1/16, H01R 9/00, G06F 1/00

(54) **DISPOSITIF D'INTERFACE PASSIF**
PASSIVE SCHNITTSTELLENVORRICHTUNG
PASSIVE INTERFACE DEVICE

(30) Priorité: 28.12.2018 FR 1874332
(43) Date de publication de la demande: 01.07.2020
(73) Titulaire: Thales, 92400 Courbevoie (FR)
(72) Inventeur: GUILLEROT, Pierre-Jean, 92622 Gennevilliers Cedex (FR); DELECRIN, Jean, 49309 Cholet (FR); RAVAUT, Yannick, 49309 Cholet (FR)
(74) Mandataire: Marks & Clerk France

(56) Documents cités:
- US-A1- 2015 185 778
- Anonymous: "Operating Manual, BulletPlus 4G/LTE Dual SIM Ethernet/Serial/USB Gateway w/WIFI", Microhard , 1 juin 2016 (2016-06-01), pages 1-25, XP002795442, Calgary, Alberta, Canada Extrait de l'Internet: URL:http://www.microhardcorp.com/wirelessb ackup/manuals/BulletPlus.Operating%20Manua l.v1.3.1.pdf [extrait le 2019-11-05]
- Anonymous: "MultiConnect OCG-DOpen Communications Gateways - Device", Multi-Tech , 2 mars 2015 (2015-03-02), XP002795443, Mounds View, MN, USA Extrait de l'Internet: URL:https://www.multitech.com/documents/pu blications/data-sheets/86002159.pdf [extrait le 2019-11-06]

## Description

L'invention concerne un dispositif d'interface passif et durci (résistant à des contraintes électromagnétiques et environnementales (climatiques et mécaniques) d'un ensemble de protocoles de communication et de services proposés par des fonctions d'un équipement de radiocommunications. Ces informations sont mises à disposition de l'utilisateur, à partir d'une embase disponible sur la face avant d'un poste radio. Les différents signaux sont répartis et mis à disposition via cette interface sur des embases propres à chaque fonction. Ces embases permettent grâce à leurs caractéristiques physiques de respecter la compatibilité avec les standards technologiques de l'interconnexion inhérents à chaque fonction (USB, RS232, Ethernet).

L'invention peut être utilisée pour l'interconnexion de postes radio sur des porteurs ou des systèmes embarqués et mobiles.

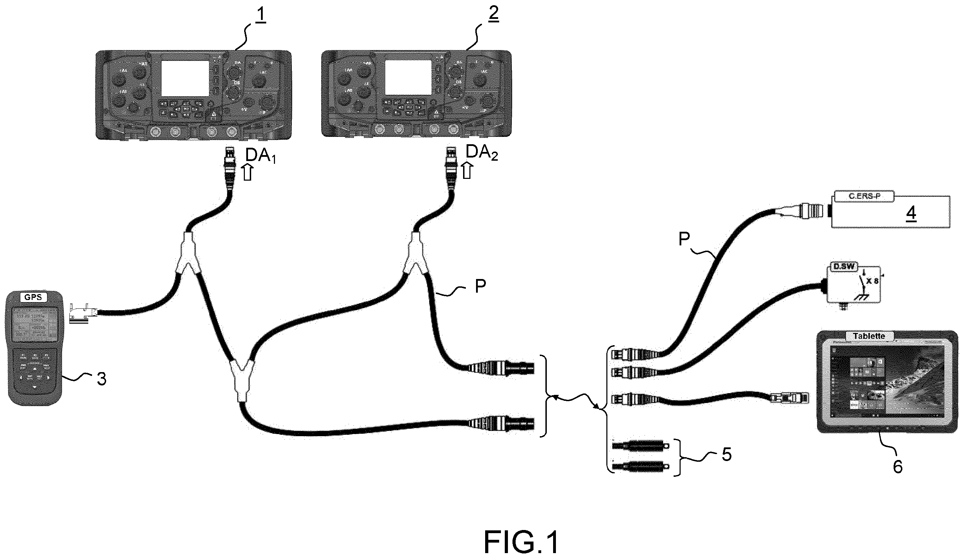

Le besoin d'interfacer une ou plusieurs radios 1, 2 (figure 1) avec un ou plusieurs équipements externes, tel qu'un système de positionnement de type GPS (Global Positioning System), 3, un chargeur 4 ERS-p pour des radios mobiles, des clés de type USB 5, une tablette 6, ou des radios entre elles, au travers d'un boîtier interface est un besoin récurrent et bien réel dans le domaine de l'intégration de systèmes de communications sur des porteurs. Le document Operating Manual, BulletPlus", 1 juin 2016 (2016-06-01), pages 1-25, Calgary, Alberta, Canada Extrait de l'Internet:URL:http:// www.microhardcorp.com/wirelessbackup/manuals/BulletPlus.Operating%20Manual.v1.3.1 .pdf, décrit des passerelles cellulaires doubles Ethernet / série / USB haute performance avec WiFi, équipées de 3 ports Ethernet RJ45, capacité double SIM, 2 E / S analogiques programmables, GPS autonome, WiFi 802.11 b / g / n et un port de communication série RS232.

Lorsque l'on cherche à connecter un ou plusieurs postes radios sur des porteurs, l'utilisation de cordon pieuvre P complexe, illustrée à la figure 1, qui comporte plus de deux extrémités est fréquente. Ces cordons pieuvres P customisés au porteur utilisateur se révèlent coûteux et difficiles à réaliser et à intégrer.

De plus, en cas de dysfonctionnement d'une fonction d'un tel cordon, il est souvent nécessaire de le démonter entièrement. Ceci entraîne l'arrêt total des services.

Il existe à l'heure actuelle un besoin de disposer d'une interface de connexion simple, rapide à mettre en place, et qui permet de conserver le fonctionnement du système au moins partiellement en cas d'intervention sur cette interface lorsqu'une des connexions est défaillante.

L'invention concerne un boîtier d'interface entre au moins un premier poste radio et un ou plusieurs équipements externes, caractérisé en ce qu'il comporte au moins les éléments suivants :
- Une première embase dédiée au premier poste radio,
- Une deuxième embase adaptée à assurer la liaison entre le premier poste et un dispositif de géolocalisation,
- Une troisième embase adaptée à assurer la liaison entre le premier poste radio et un périphérique Ethernet extérieur,
- Une quatrième embase adaptée à assurer une liaison Ethernet avec un chargeur,
- Une cinquième embase adaptée à assurer une liaison avec un premier périphérique USB,
- Une sixième embase adaptée à assurer une liaison avec un deuxième périphérique USB,
- Une huitième embase adaptée à assurer la connexion entre le premier poste radio et un dispositif de test.
- Une septième embase dédiée à un deuxième poste radio et au rebouclage d'une liaison Ethernet du premier poste radio vers un connecteur Ethernet « EthA1/ B2 », via un bouchon dédié.

Les embases sont, par exemple, affectées de la manière suivante :
- L'embase du dispositif de géolocalisation comporte deux contacts affectés à des signaux émissions TX, réception RX d'une liaison RS232 et un contact affecté à un signal 1 PPS et un contact affecté à la masse électrique,
- L'embase du chargeur comporte quatre contacts affectés à deux paires d'une ligne Ethernet Voie du premier poste radio, un contact affecté à un signal permettant le maintien de l'heure TOP_H_Cluster, quatre autres contacts pour la masse électrique,
- La cinquième embase comporte deux contacts affectés à une paire de la liaison Data série différentielle, un contact pour la masse électrique et un contact pour l'alimentation d'un périphérique USB,
- La sixième embase possédant les mêmes caractéristiques que la cinquième embase,
- L'embase Ethernet « EthA1/ B2 » comporte quatre contacts affectés à deux paires d'une ligne Ethernet Voie A1, un contact affecté à un signal, TOP_H_Cluster, quatre contacts pour la masse électrique,
- Le bouchon de rebouclage est placé sur la deuxième embase en l'absence d'un second poste radio,
- Les paires de contact affectées à l'Ethernet sont reliées à la voie A1 de la ligne Ethernet de la première embase,
- Dans le cas d'une utilisation avec deux postes radio, l'embase du second poste comporte quatre contacts affectés aux deux paires d'une ligne Ethernet Voie B2 active, en l'absence du deuxième poste radio et après application du bouchon de rebouclage sur cette embase,
- L'embase S8 « déport discret » comporte un contact affecté à une commande Arrêt/Marche d'un poste radio, quatre contacts affectés à une commande des « discrets noirs » plateforme, un contact affecté au signal TOP_H_Cluster, un contact pour la masse électrique.

Les embases peuvent aussi être affectées de la manière suivante :
- L'embase DA1 du premier poste radio comporte quatre contacts affectés à deux paires d'une ligne Ethernet Voie A1 connectées par l'interface à la voie A2 de l'embase DA2 du deuxième poste radio,
- L'embase pour le dispositif de géolocalisation comporte deux contacts affectés à des signaux émission TX, réception RX d'une liaison RS232, un contact affecté à un signal 1_PPS et un contact affecté à la masse électrique,
- L'embase du chargeur comporte quatre contacts affectés aux deux paires de la ligne Ethernet Voie B du premier poste, un contact affecté au signal TOP_H_Cluster, quatre contacts pour la masse électrique,
- L'embase pour une première connexion USB comporte deux contacts affectés à une paire de la liaison Data série différentielle, autre contact pour la masse électrique et un autre pour l'alimentation du périphérique USB,
- L'embase pour la deuxième connexion USB comporte deux contacts affectés à une paire de la liaison Data série différentielle, et un autre contact pour la masse électrique et un autre pour l'alimentation du périphérique USB,
- L'embase Ethernet « EthA1/ B2 » comporte quatre contacts affectés aux deux paires d'une ligne Ethernet Voie B2, un contact affecté au signal TOP_H_Cluster, quatre autres contacts pour la masse électrique,
- L'embase DA2 du second poste radio comporte quatre contacts affectés aux deux paires d'une ligne Ethernet Voie A2 connectées par l'interface à la voie A1 de l'embase DA1 du premier poste radio,
- L'embase « déport discret » comporte un contact affecté à la commande de l'A/M du premier et du deuxième poste radio, quatre contacts affectés à la commande des « discrets noirs » plateformes du premier poste radio et du second poste radio, un contact affecté au signal TOP_H_Cluster, un contact pour la masse électrique.

Les dessins annexés illustrent l'invention :
[Fig.1] représente une vue d'interconnexion selon l'art antérieur,
[Fig.2] représente un synoptique électrique du boîtier interconnexion selon l'invention,
[Fig.3] illustre un schéma électrique unifilaire de principe du boîtier d'interconnexion selon l'invention, et
[Fig.4] est une vue d'interconnexion 2D de deux postes radio et périphériques avec le boîtier d'interconnexion selon l'invention.

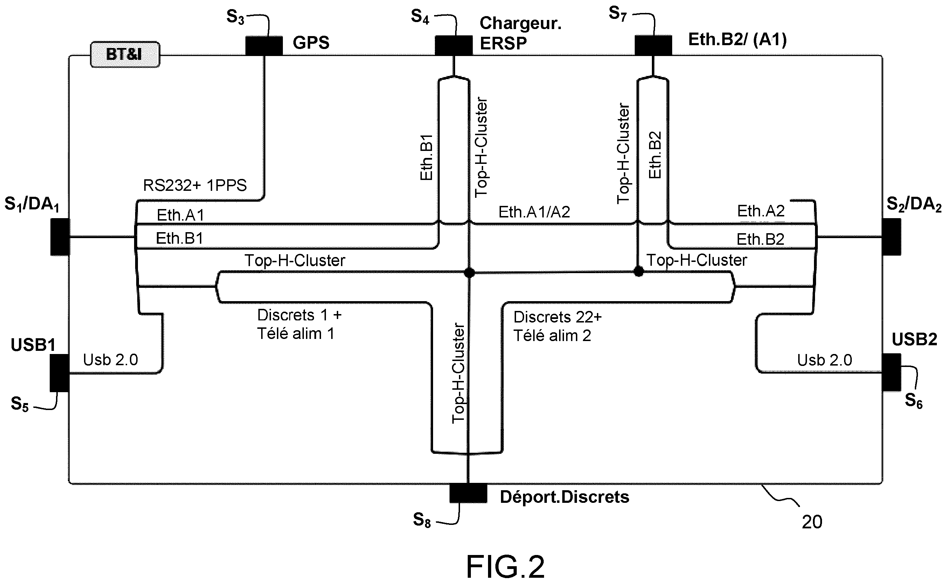

La figure 2 représente un exemple de synoptique électrique du boîtier interface. Dans cette représentation le détail des connexions par protocole n'est pas représenté. Elle est basée sur la symbolique de liaison Bus. Par exemple, dans cet exemple, la voie Ethernet A1 de l'embase DA1 d'un premier poste radio communique avec la Voie A2 de l'embase DA2 d'un deuxième poste radio, la voie Ethernet B1 de l'embase DA1 communique avec le chargeur et la voie Ethernet B2 de l'embase DA2 communique avec une embase Ethernet B2. Ce schéma identifie aussi clairement que le signal permettant le maintien de l'heure au sein d'un cluster de poste radio et de poste débarqué, désigné habituellement par l'expression « Top Horaire Cluster », est commun à toutes les embases liées au chargeur ERS-p, aux connexions Ethernet précitées, à d'éventuels déports discrets, à l'exception des embases prévues pour la connexion d'un dispositif de géolocalisation tel qu'un GPS (Global Positioning System) et pour la connexion de type USB (Universal Sérial Bus).

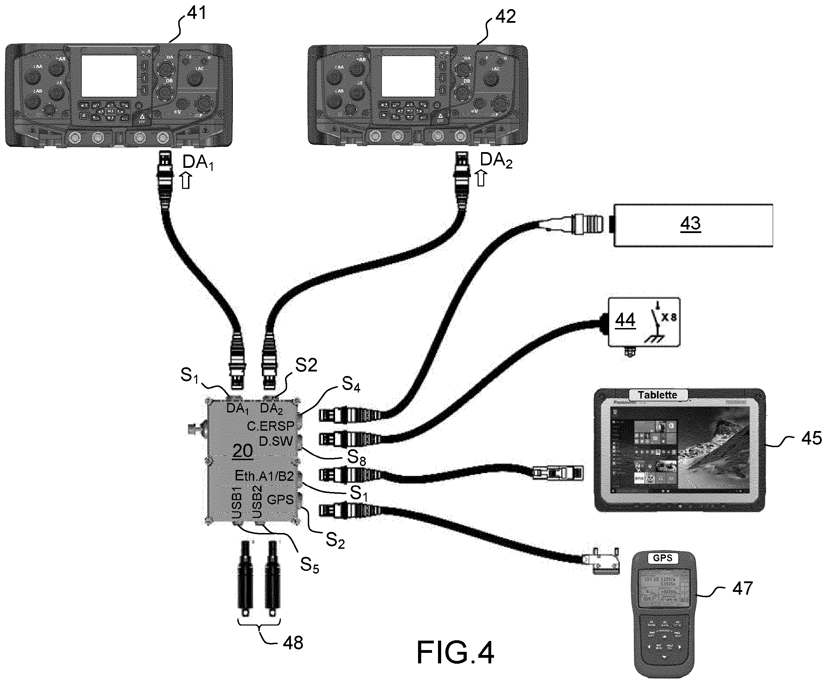

Cette figure 2 permet de suivre la distribution logique due aux mécanismes internes du boîtier d'interface 20 selon l'invention des différents protocoles et signaux sur les différentes embases. Afin de bien faire comprendre l'objet de l'invention, la description qui suit est donnée, à titre illustratif et nullement limitatif, pour l'intégration de deux postes radio 41, 42 (figure 4) dans une station de communication.

De manière plus détaillée, le boîtier interface 20 selon l'invention comprend notamment une première embase S1 pour la connexion DA1 du premier poste radio, une deuxième embase S2 pour la connexion DA2 du deuxième poste radio, une troisième embase S3 pour la connexion d'un système de géolocalisation, une quatrième embase S4 pour la connexion d'un chargeur de type ERS-p, une cinquième et sixième embases S5, S6, pour la connectique de type USB, une septième embase S7 pour la connexion Ethernet A1/B2, une huitième embase S8 pour une connexion de déports discrets. DA1 et DA2 désignent des connexions disponibles au niveau des postes radios, S1, S2, des embases du boîtier interface selon l'invention.

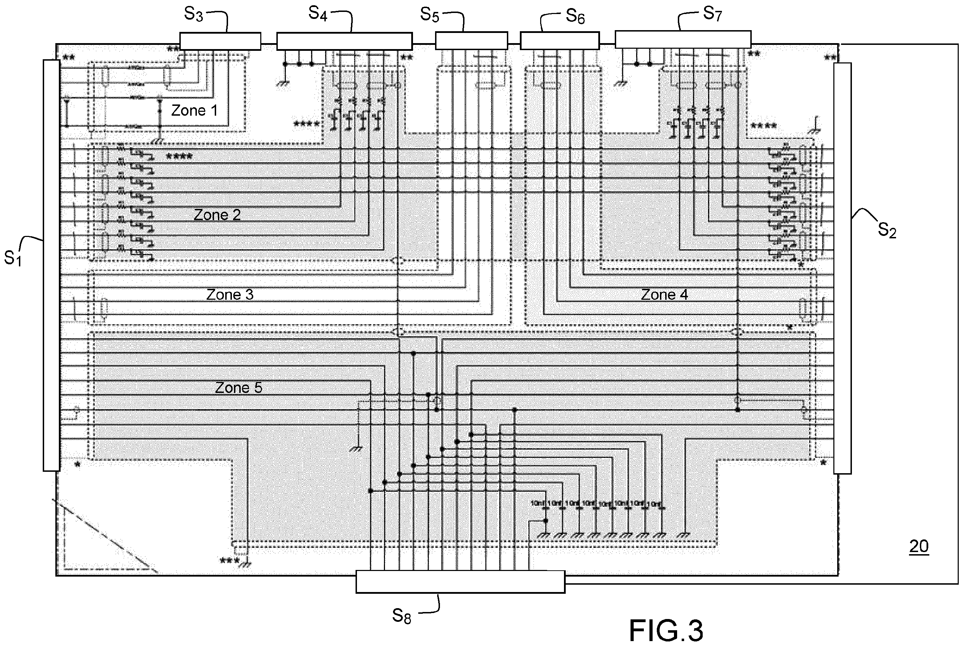

La figure 3 illustre un schéma électrique simplifié du principe du boîtier d'interface selon l'invention. Dans un premier temps, on décrit les fonctions des embases du boîtier d'interconnexion dans le cas où une seule radio est connectée.

Le boîtier interface permet par ses différentes embases, la distribution et l'accès aux différents protocoles et services sur les embases suivantes :
- Embase S1 : Liaison durcie qui prolonge tous les signaux de l'embase DA1 du premier poste radio 41 vers la circuiterie passive de distribution du boîtier interface, expression connue de l'homme du métier,
- Embase S2 : cette embase a deux vocations :
   - Connecter un second poste radio via sa propre embase DA2,
   - En l'absence d'un second poste radio, cette embase S2 est utilisée avec un bouchon de rebouclage dont le rôle est de dériver la liaison Ethernet Voie A du premier poste radio avec l'embase S7,
- Embase S3 : Liaison durcie RS232 et signal une impulsion par seconde ou 1 PPS entre le premier poste radio 41 (figure 4) et un système de positionnement de type GPS, 47,
- Embase S4 : Liaison durcie Ethernet Voie B (voie B1, voie B2) et Top H Cluster du premier poste radio avec le chargeur ERS-p,
- Embase S5: liaison série durcie USB2.0 entre le premier poste radio et des périphériques USB,
- Embase S6 : liaison série durcie USB2.0 indisponible du deuxième poste radio et des périphériques USB,
- Embase S7 : Liaison Ethernet durcie Voie A (voie A1, voie A2) du premier poste radio avec un périphérique Ethernet. Cette liaison est activée par la présence d'un bouchon P1 de rebouclage placé sur l'embase S2 (en l'absence d'un deuxième poste radio),
- Embase S8 : Liaisons d'accès au boîtier de commande des discrets, et aux lignes de télé alimentation de DNA1 Valim-DNA1 ; Valim-DNA2; Top_H_Cluster. L'embase S8 « déport discret » comporte un contact affecté à une commande Arrêt/Marche d'un poste radio, quatre contacts affectés à une commande des discrets noirs plateforme, i.e., signaux chiffrés,

Sur la figure 3, les zones sont définies comme suit. Les zones 1 à 5 définissent des zones qui doivent être découplées entre elles électromagnétiquement. Ces découplages sont mis en place pour conserver au maximum les performances des cordons qui se connectent aux embases DA1 et DA2 des deux postes radios. Les embases S1, S2, S4 et S7 Ethernet métalliques disposeront d'une protection intégrée au circuit intégré PCB, contre les interférences électromagnétiques ; trois PCB sont utilisés pour connecter les embases et relier les nappes flex pour le transport des signaux. Les zones 2, 3 et 4 qui correspondent à l'Ethernet et aux liaisons séries USB sont des zones particulièrement polluantes. Leur découplage sera assuré par des techniques appropriées et connues de l'homme du métier. Le découplage est pris en compte dans le cas d'un PCB multicouche par une disposition particulière des pistes à isoler, les lignes des commutateurs du boîtier d'interface sont découplées par des capacités.

Les embases S1, S2, S4 et S7 Ethernet ont leurs paires filtrées par ces cellules RC (résistance-capacité), non représentées sur la figure, à chacune de leurs extrémités. Les valeurs sont, par exemple, avec une valeur de résistance de 3,3 ohms pour la résistance et une valeur de capacité de 1,2 picofarads pour la capacité.

Dans le cas de l'utilisation du boîtier selon l'invention pour l'interfaçage de deux postes radios, les embases ont les fonctionnalités décrites ci-après:

Le boîtier interface selon l'invention permet par ses différentes embases, la distribution et l'accès aux différents protocoles et les services sur les embases suivantes :
- Embase S1 : liaison durcie qui prolonge tous les signaux de l'embase DA1 du premier poste radio 41 (figure 4) vers la circuiterie passive de distribution du boîtier interface. Elle permet d'établir en interne de l'interface une liaison Ethernet de la Voie A de cette embase vers la voie A2 de l'embase S2,
- Embase S2 : liaison durcie qui prolonge tous les signaux de l'embase DA2 du deuxième poste radio 42 vers la circuiterie passive de distribution du boîtier interface. Elle permet d'établir en interne de l'interface une liaison Ethernet de la Voie A2 de cette embase vers la voie A1 de l'embase S1,
- Embase S3 : liaison durcie RS232 et une impulsion par seconde 1PPS (One Pulse Per Second) entre un poste radio et un système de positionnement de type GPS,
- Embase S4 : liaison durcie Ethernet Voie B1 et Top H Cluster d'un poste radio avec le chargeur ERS-p,
- Embases S5 - S6 : liaisons séries durcies USB2.0 entre les postes radios et des périphériques USB,
- Embase S7 : liaison Ethernet durcie du deuxième poste radio et Voie B2 avec un périphérique Ethernet et liaison avec le signal Top H Cluster activé par l'un des postes radios. La liaison Ethernet disponible est illustrée par l'utilisation d'une tablette ou d'un microordinateur PC sur la Figure 4,
- Embase S8 : liaisons d'accès au boîtier de commande des discrets et aux lignes Valim-DNA1 ; Valim-DNA2; Top_H_Cluster.

L'embase DA1 du premier poste radio 41 est connectée sur l'embase S1 du boîtier interface selon l'invention et l'embase DA2 du deuxième poste radio 42 est connectée sur l'embase S2 du boîtier interface selon l'invention lorsqu'il y a deux postes radios ou sur le bouchon de rebouclage.

La figure 4 illustre un premier exemple d'interfaçage de deux postes radio, 41, 42 avec un GPS 47 (Global Positioning System), un chargeur ERS-p 43, une tablette durcie 45, une Clef USB, 46, et un cordon adaptateur, un boîtier de commande des discrets 44, via le boîtier d'interface selon l'invention.

Les deux postes radios 41, 42 sont connectés aux deux embases S1, S2, le chargeur ERS-p 43 est connecté à l'embase S4, un boîtier de test des discrets est connecté à l'embase S4, la tablette durcie 45 est connectée à l'embase S1, le GPS 47 à l'embase S2, et deux clés USB 48 sont connectées respectivement à l'embase S5 et à l'embase S6.

Les caractéristiques électriques des liaisons sont, par exemple, les suivantes :
- Liaisons USB : USB 2.0 Pleine Vitesse disponible ou Full Speed disponible,
- Liaison RS232 + 1PPS: Liaison série à 4800 bits/s Maximum; 1PPS (),
- Liaison Ethernet : 10/1000 BT,
- Lien Top_H_Cluster distribué sur embase Chargeur ERSP; EthA1/ B2; Déport SW à partir de l'embase S1/DA1 et de l'embase S2/DA2,
- Les PCB et nappes de l'interface pour éviter les ruptures d'impédances dans les lignes (Ethernet; RS232; USB; coaxiale) respectent, par exemple, à ± 10% les impédances suivantes : USB de 90 Ohms par paire ; Ethernet à 100 Ohms par paire ; 50 Ohms pour le signal 1 PPS et TOP_H_Cluster.

Le boîtier interface selon l'invention permet de s'affranchir de la réalisation de cordons de type « pieuvres spécifiques durcies » complexes et fragiles et de se limiter à l'utilisation de cordons simples et robustes à seulement deux extrémités. Ses caractéristiques électriques de manière entièrement passive permettent de préserver les performances des lignes de transmission affectées aux différents protocoles. Elle offre aussi l'avantage dans le cas de porteur plus sensible aux perturbations CEM de pouvoir accroître le filtrage des lignes Ethernet.

## Revendications

1. Boîtier d'interface (20) entre au moins un premier poste radio (41) et un ou plusieurs équipements externes (44, 47) **caractérisé en ce qu'**il comporte au moins les éléments suivants :
- Une première embase S1 dédiée au premier poste radio (41),
- Une deuxième embase S2 adaptée à assurer la liaison entre le premier poste et un dispositif de géolocalisation,
- Une troisième embase S3 adaptée à assurer la liaison entre le premier poste radio et un périphérique Ethernet extérieur,
- Une quatrième embase S4 adaptée à assurer une liaison Ethernet avec un chargeur (4),
- Une cinquième embase S5 adaptée à assurer une liaison avec un périphérique USB,
- Une sixième embase S6 adaptée à assurer une liaison avec un périphérique USB,
- Une huitième embase S8 adaptée à assurer la connexion entre le premier poste radio et un dispositif de test, **caractérisé en ce qu'**il comporte
- Une septième embase S7 dédiée à un deuxième poste radio (42) et au rebouclage d'une liaison Ethernet du premier poste radio (41) vers un connecteur Ethernet « EthA1/ B2 », via un bouchon dédié.

2. Boîtier d'interface selon la revendication 1 **caractérisé en ce que** lesdites embases sont affectées de la manière suivante :
- L'embase du dispositif de géolocalisation comporte deux contacts affectés à des signaux émissions TX, réception RX d'une liaison RS232 et un contact affecté à un signal 1 PPS et un contact affecté à la masse électrique,
- L'embase du Chargeur comporte quatre contacts affectés à deux paires d'une ligne Ethernet Voie du premier poste radio (41), un contact affecté à un signal permettant le maintien de l'heure TOP_H_Cluster, quatre autres contacts pour la masse électrique,
- L'embase S5 comporte deux contacts affectés à une paire de la liaison Data série différentielle, un contact pour la masse électrique et un contact pour l'alimentation d'un périphérique USB,
- L'embase S6 possédant les mêmes caractéristiques que l'embase S5,
- L'embase Ethernet « EthA1/ B2 » comporte quatre contacts affectés à deux paires d'une ligne Ethernet Voie A1, un contact affecté à un signal, TOP_H_Cluster, quatre contacts pour la masse électrique,
- Le bouchon de rebouclage est placé sur l'embase S2 en l'absence d'un second poste radio, Les paires de contact affectées à l'Ethernet sont reliées à la voie A1 de la ligne Ethernet de l'embase S1,
- Dans le cas d'une utilisation avec deux postes radio, l'embase S2 du second poste comporte quatre contacts affectés aux deux paires d'une ligne Ethernet Voie B2 active, en l'absence du deuxième poste radio et après application du bouchon de rebouclage sur cette embase,
- L'embase S8 « déport discret » comporte un contact affecté à une commande Arrêt/Marche d'un poste radio, quatre contacts affectés à une commande des « discrets noirs » plateforme, un contact affecté au signal TOP_H_Cluster, un contact pour la masse électrique.

3. Boîtier d'interface selon l'un des revendications 1 ou 2 **caractérisé en ce que** les embases sont affectées de la manière suivante :
- L'embase DA1 du premier poste radio (41) comporte quatre contacts affectés à deux paires d'une ligne Ethernet Voie A1 connectées par l'interface à la voie A2 de l'embase DA2 du deuxième poste radio (42),
- L'embase pour le dispositif de géolocalisation comportent deux contacts affectés à des signaux émission TX, réception RX d'une liaison RS232, un contact affecté à un signal 1_PPS et un contact affecté à la masse électrique,
- L'embase du Chargeur comporte quatre contacts affectés aux deux paires de la ligne Ethernet Voie B1 du premier poste, un contact affecté au signal TOP_H_Cluster, quatre contacts pour la masse électrique,
- L'embase pour une première connexion USB comporte deux contacts affectés à une paire de la liaison Data série différentielle, autre contact pour la masse électrique et un autre pour l'alimentation du périphérique USB,
- L'embase pour la deuxième connexion USB comporte deux contacts affectés à une paire de la liaison Data série différentielle, et un autre contact pour la masse électrique et un autre pour l'alimentation du périphérique USB,
- L'embase Ethernet « EthA1/ B2 » comporte quatre contacts affectés aux deux paires d'une ligne Ethernet Voie B2, un contact affecté au signal TOP_H_Cluster, quatre autres contacts pour la masse électrique,
- L'embase DA2 du second poste radio comporte quatre contacts affectés aux deux paires d'une ligne Ethernet Voie A2 connectées par l'interface à la voie A1 de l'embase DA1 du premier poste radio (41),
- L'embase « déport discret » comporte un contact affecté à la commande de l'A/M du premier et du deuxième poste radio, quatre contacts affectés à la commande des « discrets noirs » plateformes du premier poste radio et du second poste radio, un contact affecté au signal TOP_H_Cluster, un contact pour la masse électrique.

## Patentansprüche

1. Schnittstellengerät (20) zwischen mindestens einer Funkstation (41) und einer oder mehreren externen Ausrüstungen (44, 47), **dadurch gekennzeichnet, dass** es mindestens folgende Elemente umfasst:
- einen ersten Sockel S1, welcher der ersten Funkstation (41) zugeordnet ist,
- einen zweiten Sockel S2, welcher geeignet ist, die Verbindung zwischen der ersten Station und einer Geolokalisierungsvorrichtung sicherzustellen,
- einen dritten Sockel S3, welcher geeignet ist, die Verbindung zwischen der ersten Funkstation und einem externen Ethernet-Peripheriegerät sicherzustellen,
- einen vierten Sockel S4, welcher geeignet ist, eine Ethernet-Verbindung mit einem Ladegerät (4) sicherzustellen,
- einen fünften Sockel S5, welcher geeignet ist, eine Verbindung mit einem USB-Peripheriegerät sicherzustellen,
- einen sechsten Sockel S6, welcher geeignet ist, eine Verbindung mit einem USB-Peripheriegerät sicherzustellen,
- einen achten Sockel S8, welcher geeignet ist, die Verbindung zwischen der ersten Funkstation und einer Testvorrichtung sicherzustellen, **dadurch gekennzeichnet, dass** er Folgendes umfasst:
- einen siebten Sockel S7, welcher einer zweiten Funkstation (42) und der Verschleifung einer Ethernet-Verbindung der ersten Funkstation (41) mit einem Ethernet-Anschluss "EthA1/ B2" über einen zugeordneten Stopfen zugeordnet ist.

2. Schnittstellengerät nach Anspruch 1, **dadurch gekennzeichnet, dass** die Sockel wie folgt zugewiesen sind:
- der Sockel der Geolokalisierungsvorrichtung umfasst zwei Kontakte, welche TX-Sendesignalen, RX-Empfangssignalen einer RS232-Leitung zugewiesen sind und einen Kontakt, welcher einem PPS-Signal 1 zugewiesen ist und einen Kontakt, welcher der elektrischen Masse zugewiesen ist,
- der Sockel des Ladegerätes umfasst vier Kontakte, welche zwei Paaren einer Ethernet-Leitung für den Kanal der ersten Funkstation (41) zugewiesen sind, einen Kontakt, welcher einem Signal zugewiesen ist, welches den Beibehalt der TOP_H_Cluster-Uhrzeit ermöglicht, vier weitere Kontakte für die elektrische Masse,
- der Sockel S5 umfasst zwei Kontakte, welche einem Paar der seriellen Differenzial-Datenverbindung sind, einen Kontakt für die elektrische Masse und einen Kontakt für die Speisung eines USB-Peripheriegerätes,
- wobei der Sockel S6 die gleichen Merkmale aufweist wie der Sockel S5,
- der Ethernet-Sockel "EthA1/ B2" umfasst vier Kontakte, welche zwei Paaren einer Ethernet-Leitung für den Kanal A1 zugewiesen sind, einen Kontakt, welcher einem TOP_H_Cluster-Signal zugewiesen ist, vier Kontakte für die elektrische Masse,
- der Verschleifungsstopfen ist in Abwesenheit einer zweiten Funkstation am Sockel S2 platziert,
- die dem Ethernet zugewiesenen Kontaktpaare sind mit dem Kanal A1 der Ethernet-Leitung des Sockels S1 verbunden,
- im Fall einer Verwendung mit zwei Funkstationen umfasst der Sockel S2 der zweiten Station vier Kontakte, welche den beiden Paaren einer Ethernet-Leitung für den aktiven Kanal B2 zugewiesen sind, in Abwesenheit der zweiten Funkstation und nach Aufbringen des Verschleifungsstopfens auf diesen Sockel,
- der Sockel S8 "diskrete Auslagerung" umfasst einen Kontakt, welcher einem Ein-/Aus-Steuerbefehl einer Funkstation zugewiesen ist, vier Kontakte, welche einer Steuerung der "schwarzen diskreten" Plattform-Signale zugewiesen sind, einen Kontakt, welcher dem TOP_H_Cluster-Signal zugewiesen ist, einen Kontakt für die elektrische Masse.

3. Schnittstellengerät nach Anspruch 1 oder 2, **dadurch gekennzeichnet, dass** die Sockel wie folgt zugewiesen sind:
- der Sockel DA1 der ersten Funkstation (41) umfasst vier Kontakte, welche zwei Paaren eine Ethernet-Leitung für den Kanal A1 zugewiesen sind, welche über die Schnittstelle mit dem Kanal A2 des Sockels DA2 der zweiten Funkstation (42) verbunden sind,
- der Sockel für die Geolokalisierungsvorrichtung umfasst zwei Kontakte, welche TX-Sendesignalen, RX-Empfangssignalen einer RS232-Leitung zugewiesen sind, einen Kontakt, welcher einem PPS-Signal 1 zugewiesen ist und einen Kontakt, welcher der elektrischen Masse zugewiesen ist,
- der Sockel des Ladegerätes umfasst vier Kontakte, welche den zwei Paaren der Ethernet-Leitung für den Kanal B1 der ersten Station zugewiesen sind, einen Kontakt, welcher dem TOP_H_Cluster-Signal zugewiesen ist, vier Kontakte für die elektrische Masse,
- der Sockel für eine erste USB-Verbindung umfasst zwei Kontakte, welche einem Paar der seriellen Differenzial-Datenverbindung zugewiesen sind, einen anderen Kontakt für die elektrische Masse und einen anderen für die Speisung des USB-Peripheriegerätes,
- der Sockel für die zweite USB-Verbindung umfasst zwei Kontakte, welche einem Paar der seriellen Differenzial-Datenverbindung zugewiesen sind, und einen anderen Kontakt für die elektrische Masse und einen anderen für die Speisung des USB-Peripheriegerätes,
- der Ethernet-Sockel "EthA1/ B2" umfasst vier Kontakte, welche zwei Paaren einer Ethernet-Leitung für den Kanal B2 zugewiesen sind, einen Kontakt, welcher dem TOP_H_Cluster-Signal zugewiesen ist, vier andere Kontakte für die elektrische Masse,
- der Sockel DA2 der zweiten Funkstation umfasst vier Kontakte, welche den beiden Paaren eine Ethernet-Leitung für den Kanal A2 zugewiesen sind, welche über die Schnittstelle mit dem Kanal A1 des Sockels DA1 der ersten Funkstation (41) verbunden sind,
- der Sockel "diskrete Auslagerung" umfasst einen Kontakt, welcher dem Ein-/Aus- Steuerbefehl der ersten und der zweiten Funkstation zugewiesen ist, vier Kontakte, welche der Steuerung der "diskreten schwarzen" Plattformsignale der ersten Funkstation und der zweiten Funkstation zugewiesen sind, einen Kontakt, welcher dem TOP_H_Cluster-Signal zugewiesen ist, einen Kontakt für die elektrische Masse.

## Claims

1. Interface box (20) for interfacing between at least one first radio apparatus (41) and one or more external devices (44, 47), **characterized in that** it comprises at least the following elements:
- a first socket S1 dedicated to the first radio apparatus (41),
- a second socket S2 adapted to ensure the link between the first apparatus and a geolocation device,
- a third socket S3 adapted to ensure the link between the first radio apparatus and an exterior Ethernet peripheral,
- a fourth socket S4 adapted to ensure an Ethernet link with a charger (4),
- a fifth socket S5 adapted to ensure a link with a USB peripheral,
- a sixth socket S6 adapted to ensure a link with a USB peripheral,
- an eighth socket S8 adapted to ensure the connection between the first radio apparatus and a test device, **characterized in that** it comprises
- a seventh socket S7 dedicated to a second radio apparatus (42) and to the loopback of an Ethernet link of the first radio apparatus (41) to an "EthA1/ B2" Ethernet connector, via a dedicated plug.

2. Interface box according to Claim 1, **characterized in that** the said sockets are assigned in the following manner:
- The socket of the geolocation device comprises two contacts assigned to transmission TX, reception RX signals of an RS232 link and one contact assigned to a 1 PPS signal and a contact assigned to the electrical earth,
- The socket of the Charger comprises four contacts assigned to two pairs of an Ethernet line Channel of the first radio apparatus (41), a contact assigned to a signal allowing TOP_H_Cluster time keeping, four other contacts for the electrical earth,
- The socket S5 comprises two contacts assigned to a pair of the differential serial Data link, a contact for the electrical earth and a contact for the power supply of a USB peripheral,
- The socket S6 having the same characteristics as the socket S5,
- The "EthA1/ B2" Ethernet socket comprises four contacts assigned to two pairs of an Ethernet line Channel A1, a contact assigned to a signal, TOP_H_Cluster, four contacts for the electrical earth,
- The loopback plug is placed on the socket S2 in the absence of a second radio apparatus,
- the contact pairs assigned to the Ethernet are linked to channel A1 of the Ethernet line of the socket S1,
- in the case of use with two radio apparatuses, the socket S2 of the second apparatus comprises four contacts assigned to the two pairs of an active Ethernet line Channel B2, in the absence of the second radio apparatus and after application of the loopback plug on this socket,
- the "discreet offset" socket S8 comprises a contact assigned to an On/Off control of a radio apparatus, four contacts assigned to a control of the "black discreets" platform, a contact assigned to the TOP_H_Cluster signal, a contact for the electrical earth.

3. Interface box according to one of Claims 1 or 2, **characterized in that** the sockets are assigned in the following manner:
- the socket DA1 of the first radio apparatus (41) comprises four contacts assigned to two pairs of an Ethernet line Channel A1 which are connected by the interface to channel A2 of the socket DA2 of the second radio apparatus (42),
- the socket for the geolocation device comprises two contacts assigned to transmission TX, reception RX signals of an RS232 link, one contact assigned to a 1_PPS signal and a contact assigned to the electrical earth,
- the socket of the Charger comprises four contacts assigned to the two pairs of the Ethernet line Channel B1 of the first apparatus, a contact assigned to the TOP_H_Cluster signal, four contacts for the electrical earth,
- the socket for a first USB connection comprises two contacts assigned to a pair of the differential serial Data link, another contact for the electrical earth and another for the power supply of the USB peripheral,
- the socket for the second USB connection comprises two contacts assigned to a pair of the differential serial Data link, and another contact for the electrical earth and another for the power supply of the USB peripheral,
- the "EthA1/ B2" Ethernet socket comprises four contacts assigned to the two pairs of an Ethernet line Channel B2, one contact assigned to the TOP_H_Cluster signal, four other contacts for the electrical earth,
- the socket DA2 of the second radio apparatus comprises four contacts assigned to the two pairs of an Ethernet line Channel A2 which are connected by the interface to channel A1 of the socket DA1 of the first radio apparatus (41),
- the "discreet offset" socket comprises a contact assigned to the On/Off control of the first and of the second radio apparatus, four contacts assigned to the control of the "black discreets" platforms of the first radio apparatus and of the second radio apparatus, a contact assigned to the TOP_H_Cluster signal, a contact for the electrical earth.
